Europäisches Patentamt

European Patent Office

Office européen des brevets

(11) Publication number: **0 184 045**
A2

# EUROPEAN PATENT APPLICATION

(21) Application number: 85114455.0

(22) Date of filing: 14.11.85

(51) Int. Cl.⁴: $A\ 23\ L\ 1/236$

(30) Priority: 26.11.84 US 675035

(43) Date of publication of application:
11.06.86 Bulletin 86/24

(84) Designated Contracting States:
AT BE CH DE FR GB IT LI LU NL SE

(71) Applicant: THE DOW CHEMICAL COMPANY
2030 Dow Center Abbott Road P.O. Box 1967
Midland, MI 48640(US)

(72) Inventor: Labarge, Robert G.
2713 mt. Vernon
Midland Michigan 48640(US)

(72) Inventor: Christen, Jimmie D.
113 Live Oak Lane
Lake Jackson Texas 77566(US)

(72) Inventor: Baxter, Clyde Edward, Jr.
Box 222A
Clute Texas 77531(US)

(74) Representative: Sternagel, Hans-Günther, Dr. et al,
Patentanwälte Dr. M. Hann Dr. H.-G. Sternagel
Marburger Strasse 38
D-6300 Giessen(DE)

(54) Bulk filler for sweeteners.

(57) Low calorie sweetening compositions which comprise a sugar substitute and at least 90 weight percent of a polyalkylene oxide polymer are described. The compositions are useful in preparing certain candies, baked goods such as cookies, ice cream, and other foods.

EP 0 184 045 A2

Croydon Printing Company Ltd

# BULK FILLER FOR SWEETENERS

The present invention concerns compositions having sweetening properties, and in particular concerns compositions containing low calorie sweetening agents.

The desirability of providing low calorie food for those who wish to control their tendency to be overweight is well known and various low calorie food products have been prepared and offered for sale. Inasmuch as common sugar (sucrose) is high in calories and its sweetening effect can be obtained with relatively low calorie artificial sweeteners such as saccharin, many products have been offered which are sugar-free, the sweetening effect being obtained with an artificial sweetener. However, in the case of many foods, sucrose cannot be replaced with a low volume, high intensity sweetening agent because the sugar performs other essential functions, such as providing bulk in the food. Accordingly, various low calorie, alginates, gelatins, gum carrageenans and the like have been used to replace the bulk normally provided by sugar. Replacement of sugar with these gums is not always effective because the finished food product is

0184045

lacking in certain physical properties which are required.

Numerous references have disclosed the desirability of providing improved sweetening compositions. (See, for example, U.S. Patent Nos. 3,876,794; 3,766,165; 3,737,322; 3,329,508; and 2,784,100.) However, such compositions find use in limited applications.

It would be highly desirable to provide a bulk filler for low calorie sweeteners which filler is non-digestible, water-soluble, non-toxic, and which to some extent provides sensory properties similar to sugar.

The present invention concerns a low calorie sweetening composition which comprises a low calorie sugar substitute and at least 90 weight percent of a solid polyalkylene oxide polymer, which amount provides bulk-fill properties to the composition and which polyalkylene oxide polymer is essentially non-toxic, non-digestible, water-soluble and provides a solid character to the composition.

In another aspect, the present invention is a method for providing bulk properties to a low calorie sugar substitute composition which comprises contacting said sugar substitute composition with at least 90 weight percent of a solid polyalkylene oxide polymer, which amount provides bulk-fill properties to the composition and which polyalkylene oxide polymer is essentially non-toxic, non-digestible, water-soluble and provides a solid character to the composition.

A further aspect of the present invention concerns a process for preparing a low calorie sweetening composition which comprises:

reacting an alkylene oxide with an initiator in the presence of a catalyst to form, as the first component, a solid polyalkylene oxide polymer; wherein said polymer is essentially non-toxic, non-digestible, water-soluble and provides a solid character to the composition;

comingling, as the second component, a low calorie sugar substitute; and

having said first component present in at least 90 weight percent to provide bulk-fill properties to the composition.

The method and composition of this invention allow the skilled artisan to use low calorie sugar substitutes which are useful in many applications in which sugar has been employed. Of particular interest are those sweetening compositions in which the polyalkylene oxide polymer provides a crystalline character to said composition. Of particular interest are those applications where the bulk properties of a sweetening agent such as sugar are desirable. For example, compositions of this invention are useful in preparing certain candies, cookies, cakes, ice cream and other foods.

As used herein, the term "non-digestible" as referring to a substance means a substance which provides little or no caloric value. By the term "low calorie sugar substitute" is meant, that the sugar substitute contains less than about 1 calorie per gram, preferably about 0 calorie per gram, of the sugar substitute. By the term "crystalline character" is meant a crystalline character which provides sensory properties similar to that of sucrose. By the term "non-toxic" is meant a substance which is safe for human consumption. One measure of such safety can be approval for sale by the appropriate government agency.

For purposes of this invention, the water-soluble polymer is one which forms a thermodynamically stable mixture when combined with water. It is most desirable that the mixture forms spontaneously and includes true solutions in which the individual polymer molecules are dispersed as well as micellar or colloidal solutions can be aggregated to some extent, but wherein such aggregates are no larger than colloidal size. Preferably, by the term "water-soluble" is meant that the polyalkylene oxide polymer exhibits a high solubility in water similar to that of sucrose.

Low calorie sugar substitutes are those commonly known sweeteners such as saccharin, aspartame, cyclamates, acesulfame K, glycyrrhizin, thaumatin, stevioside, chloroderivatives of sucrose (e.g., tri-chlorogalactosucrose), dihydrochalcones, L-sugars, monellin, miraculin, the sweetening agents disclosed in European Patent Application 48051 and French Patent No. 2,533,210, and the like. Both nutritive and non-nutritive low calorie sugar substitutes can be employed. Most preferably, the low calorie sugar substitute is aspartame (which is commonly prepared from the amino acids L-aspartic acid and L-phenylalanine).

The polyalkyleneoxide polymers of this invention can vary. Typically, the various polymers are prepared by polymerizing various alkylene oxides onto various initiators containing active hydrogens. The reaction is carried out in the presence of either an acidic or basic catalyst, for example NaOH. A further discussion of the reaction to prepare the polyalkylene oxide polymer of this invention can be found in Polyurethanes Chemistry and Technology by J.H. Saunders and K.C. Frish, Pub. John Wiley & Sons, N.Y., pgs. 33-37, and in Glycols by G.O. Curme, Jr., and F. Johnston, Pub. Reinhold, N.Y. (1952), and in several U.S. Patents. Examples of alkylene oxides include ethylene oxide, propylene oxide and butylene oxide, preferably ethylene oxide. Copolymers of the alkylene oxides are also included.

Examples of suitable initiators for preparing the polymers include water, ethylene glycols, propylene glycols, butylene glycols, glycerine, pentaerythritol, sucrose, sorbitol, fructose, mannitol, glucose, cellulose, numerous multifunctional alcohols, the amines, and any compound containing a functionality which can contain at least one active hydrogen. Particularly preferred initiators are diethylene glycol, glycerine, sucrose and water. See, for example, the monahls and polyahls disclosed in U.S. Patent No. 4,477,603.

An example of a highly preferred polyalkylene oxide polymer is polyethylene oxide. Equivalent weights of the polymers useful in the method of this invention are such that a solid polymer results, and typically are greater than about 1,000, preferably between about 1,000 and about 100,000, and more preferably between about 1,000 and about 10,000. It is understood that polymers having molecular weights up to several million can be useful in some instances. Such polymers are most preferably employed in a powder or crystalline form. Polyalkylene oxide polymers which are substantially non-thickening when combined with water and provide substantially no laxative effect to humans are particularly preferred.

The amount of sugar substitute relative to the polyalkylene oxide polymer can vary depending upon factors such as the sweetness of the sugar substitute, the type and molecular weight of the polyalkylene oxide polymer, the desired physical (e.g., solid or crystalline) properties of the composition, and the like. Typically, the amount of sugar substitute varies from about 0.001 to about 10, preferably from about 0.05 to about 1 weight percent based on the total weight of sweetener and filler; while the amount of polyalkyleneoxide polymer varies from about 90 to about 99.999, preferably from about 99.95 to about 99 weight percent based on the total weight of sweetener and bulk filler. The manner of mixing the components is not particularly critical. For example, the components can be dry blended.

The following examples illustrate the present invention but are not intended to limit the scope.

Example 1

A powdered polyethylene oxide polymer, 99.95 weight percent, having a molecular weight of 3350 is dry blended with 0.05 weight percent of aspartame powder. The resulting composition exhibits sweetness and bulk properties similar to sucrose.

0184045

Example 2

When the procedure of Example 1 is repeated using the sweetener and polymer listed below, the resulting compositions exhibit sweetness and bulk properties similar to sucrose.

| Sweetener | Weight Percent |
|---|---|
| Aspartame | 0.055 |
| Saccharin | 0.050 |
| Acesulfame K | 0.067 |
| Stevioside | 0.062 |
| Thaumatin | 0 003 |

The amount of polyethylene oxide polymer mixed with each of the above sweeteners is enough to equal 100 weight percent. The following polymers were tested with each of the above sweeteners: polyethylene oxide polymers having molecular weights of

1,000
1,450
3,350
8,000 and
100,000.

Example 3

When the procedure of Example 2 is repeated using polypropylene oxide polymers having molecular weights of 2,000 and 4,000, the resulting compositions exhibit sweetness and bulk properties similar to sucrose.

Example 4

When the procedure of Example 2 is repeated using copolymers comprising polyethylene oxide and polypropylene oxide having molecular weights of 5,000 and 10,000, the resulting compositions exhibit sweetness and bulk properties similar to sucrose.

1. A low calorie sweetening composition which comprises a low calorie sugar substitute and at least 90-weight-percent of a solid polyalkylene oxide polymer, which amount provides bulk-fill properties to the composition and which polyalkylene oxide polymer is essentially non-toxic, non-digestible, water-soluble and provides a solid character to the composition.

2. A composition of Claim 1 wherein polyalkylene oxide polymer provides a crystalline character to the composition.

3. A composition of Claim 1 wherein said sugar substitute is aspartame, saccharin, cyclamate, acesulfame K, thaumatin, stevioside, chloroderivatives of sucrose, glycyrrhizin, dihydrochalcones, L-sugars, monellin or miraculin.

4. A composition of Claim 3 wherein said sugar substitute is aspartame.

5. A composition of Claim 1 wherein said polyalkylene oxide polymer is a polyethylene oxide polymer.

0184045

6.    A composition of Claim 1 or 5 wherein said polyalkylene oxide polymer has a molecular weight between about 1,000 and about 100,000.

7.    A composition of Claim 6 wherein said polyalkylene oxide polymer has a molecular weight between about 1,000 and about 10,000.

8.    A composition of Claim 1 wherein said polyalkylene oxide polymer is substantially non-thickening when combined with water and provides no laxative effect to humans.

9.    A composition of Claim 1 wherein the sugar substitute is dry blended with the polymer.

10.   A method for providing bulk properties to a low calorie sugar substitute composition which comprises contacting said sugar substitute composition with at least 90 weight percent of a solid polyalkylene oxide polymer, which amount provides bulk-fill properties to the composition and which polyalkylene oxide polymer is essentially non-toxic, non-digestible, water-soluble and provides a solid character to the composition.

CLAIMS FOR AUSTRIA
==================

1.    A process for preparing a low calorie sweetening composition which comprises:

reacting an alkylene oxide with an initiator in the presence of a catalyst to form, as the first component, a solid polyalkylene oxide polymer; wherein said polymer is essentially non-toxic, non-digestible, water-soluble and provides a solid character to the composition;

comingling, as the second component, a low calorie sugar substitute; and

having said first component present in at least 90 weight percent to provide bulk-fill properties to the composition.

2.    A process of Claim 1 wherein the initiator is diethylene glycol, glycerine, sucrose or water.

3.    A process of Claim 1 or 2 wherein the catalyst is sodium hydroxide.

4.    A process of Claim 1 wherein the second component is aspartame, saccharin, cyclamate, acesulfame K, thaumatin, stevioside, chloroderivatives of sucrose, glycyrrhizin, dihydrochalcones, L-sugars, monellin or miraculin.

32,417-F

5. A process of Claim 1 wherein the first component is polyethylene oxide.

6. A process of Claim 1 or 5 wherein the first component has a molecular weight between about 1,000 and about 100,000.

7. A process of Claim 6 wherein the first component has a molecular weight between about 1,000 and about 10,000.

8. A process of Claim 1 wherein the components are comingled by dry blending.

9. A process of Claim 1 wherein the first component provides a crystalline character to the composition.

10. A method for providing bulk properties to a low calorie sugar substitute composition which comprises contacting said sugar substitute composition with at least 90 weight percent of a solid polyalkylene oxide polymer, which amount provides bulk-fill propperties to the composition and which polyalkylene oxide polymer is essentially non-toxic, non-digestible, water-soluble and provides a solid character to the composition.

32,417-F